Europäisches Patentamt

European Patent Office

Office européen des brevets

(11) Veröffentlichungsnummer: **0 389 664**
A1

## EUROPÄISCHE PATENTANMELDUNG

(21) Anmeldenummer: 89105716.8

(22) Anmeldetag: 31.03.89

(51) Int. Cl.5: **H01G 9/00, H01G 1/08**

(43) Veröffentlichungstag der Anmeldung:
03.10.90 Patentblatt 90/40

(84) Benannte Vertragsstaaten:
AT BE CH DE ES FR GB GR IT LI LU NL SE

(71) Anmelder: **Siemens Aktiengesellschaft**
**Wittelsbacherplatz 2**
**D-8000 München 2(DE)**

(72) Erfinder: **Schweikert, Wilhelm, Dipl.-Ing. (FH)**
**Kistelbergstrasse 33**
**D-7920 Heidenheim(DE)**
Erfinder: **Will, Norbert, Dipl.-Ing.**
**Emil-Nolde-Strasse 13**
**D-7920 Heidenheim(DE)**

(54) **Elektrischer Kondensator, insbesondere Wickel-Elektrolytkondensator.**

(57) Ein Kondensatorwickel (4) ist in ein metallisches Gehäuse (5) eingebaut. Der Wickel (4) besitzt an den beiden Stirnseiten überstehende Elektrodenfolien (7, 9) die in thermischem Kontakt mit dem Boden (6) und einer metallischen Platte (16) stehen. Die hierdurch gebildeten Wärmebrücken sorgen für eine bessere Wärmeableitung bei hohen Wechselstrombelastungen.

FIG 6

EP 0 389 664 A1

## Elektrischer Kondensator, insbesondere Wickel-Elektrolytkondensator

Die Erfindung betrifft einen elektrischen Kondensator mit selbsttragenden Elektrodenfolien, insbesondere Wickel-Elektrolytkondensator für hohe Wechselstrombelastbarkeit, der in ein metallisches Gehäuse eingebaut ist und eine metallische Wärmebrücke zwischen Kondensator und Gehäuse besitzt, die durch eine einseitig eine Stirnseite überragende Elektrodenfolie gebildet wird, die in thermischem Kontakt zum Boden des Gehäuses steht.

Wickel-Elektrolytkondensatoren bestehen im allgemeinen aus einer Anodenfolie aus Aluminium, die mit einer dielektrisch wirksamen Oxidschicht versehen ist. Die Kathode des Kondensators wird durch den Betriebselektrolyt gebildet, der meistens in saugfähigen Isolierfolien, z.B. aus Papier, gespeichert ist. Als Kathodenzuführung dient eine weitere Aluminiumfolie, die Kathodenfolie.

Bei Belastung eines derartigen Kondensators mit Wechselstrom entsteht im Kondensatorwickel Verlustwärme, die über das Gehäuse an die Umgebung abgegeben wird. Die Wärme führt zu einer Überhitzung des Kondensatorwickels und damit zu einer starken Verringerung der Brauchbarkeitsdauer.

Um den thermischen Widerstand zwischen dem erwärmten Wickel und dem Gehäuse zu verringern, besitzen Wickel-Elektrolytkondensatoren für hohe Wechselstrombelastungen eine zusätzliche metallische Wärmebrücke vom Kondensatorwickel zum Boden des Gehäuses. Diese Wärmebrücke wird dadurch gebildet, daß die Kathodenfolie einseitig zum Becherboden übersteht und somit thermischen Kontakt zum Gehäuse besitzt. Zur besseren Wärmeableitung kann am Boden des Gehäuses ein Kühlblech befestigt werden, sowie eine Zwangskühlung durch Wasser, Öl bzw. bewegte Luft vorgenommen werden. Die geschilderten Zusammenhänge sind ausführlich im Siemens- Datenbuch 1989/90 "Aluminium- und Tantal-Elektrolyt-Kondensatoren" auf den S. 31 bis 36 im Kapitel 5.5 "Wechselstrombelastung" dargestellt.

Durch die geschilderte einseitige thermische Kontaktierung des Wickels mit dem Becher müssen große Wärmeströme über lange Wege abgeleitet werden, so daß die Wechselstrombelastbarkeit bei vorgegebener Brauchbarkeitsdauer begrenzt ist.

Aufgabe der Erfindung ist es, den thermischen Widerstand zwischen Kondensatorwickel und Gehäuse zu verringern, damit der Kondensator höheren Wechselstrombelastungen ohne unzulässige Temperaturüberhöhungen ausgesetzt werden kann.

Diese Aufgabe wird erfindungsgemäß dadurch gelöst, daß im Kondensator eine zweite Wärmebrücke angeordnet ist, die durch eine die zweite Stirnseite überragende Elektrodenfolie gebildet wird, die in thermischem Kontakt mit einem weiteren Gehäuseteil steht.

Weiterbildungen des Erfindungsgegenstandes sind in den Unteransprüchen angeführt.

Die Vorteile werden anhand der folgenden Ausführungsbeispiele näher erläutert.

In der dazugehörenden Zeichnung zeigen

FIG 1 den thermischen Widerstand bei einem herkömmlichen Kondensator,

FIG 2 den thermischen Widerstand bei einem Kondensator nach der Erfindung,

FIG 3 ein Wickelschema mit überstehenden Kathoden,

FIG 4 ein Wickelschema mit überstehender Kathode und Anode,

FIG 5 einen Kondensator mit zusätzlicher Wärmeableitplatte,

FIG 6 einen Kondensator mit integrierter Wärmeableitplatte,

FIG 7 einen Kondensator mit zwei voneinander isolierten Gehäusebechern,

FIG 8 die Verteilung des Wärmestroms bei unterschiedlichen Kühlmethoden und

FIG 9 die Temperaturverteilung in der Kondensatorwickel-Achse.

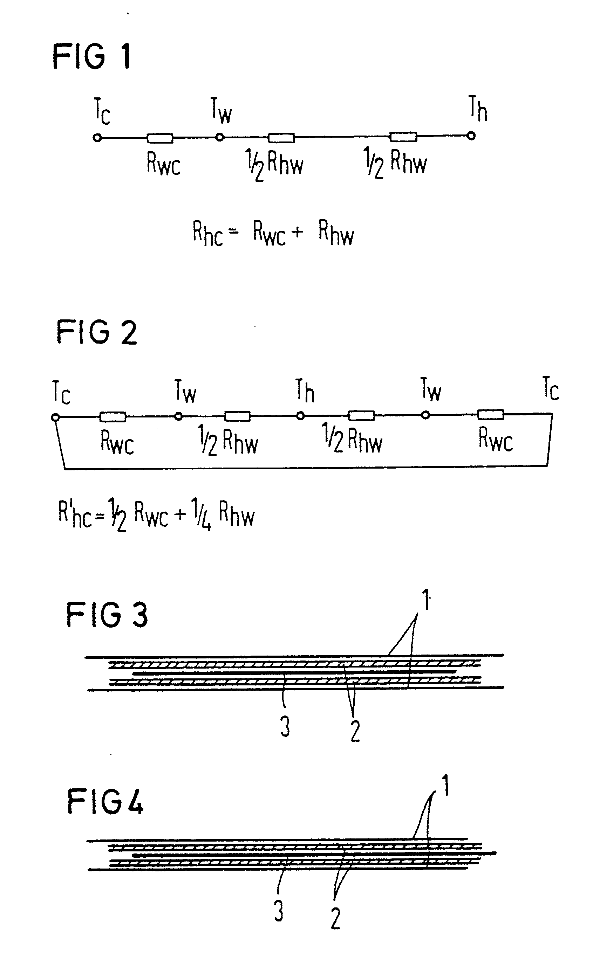

In der FIG 1 ist schematisch der Wärmeableitungsweg für einen herkömmlichen Wickelelektrolytkondensator dargestellt, bei dem die Kathodenfolien einseitig zum Becherboden überstehen, so daß die Wärmeableitung über den Becherboden erfolgt. $T_h$ ist die "Hot-Spot-Temperatur", die im Kondensatorwickel durch Verlustwärme entsteht. $T_w$ ist die äußere Wickel-Temperatur und $T_c$ die Gehäuse-Temperatur. Mit $R_{hw}$ ist der thermische Widerstand im Wickel zur "Hot-Spot-Region" und mit $R_{wc}$ der thermische Widerstand zwischen Wickel und Gehäuse bezeichnet. Hiermit ergibt sich ein thermischer Widerstand zwischen "Hot-Spot-Region" und Gehäuse $R_{hc} = R_{wc} + R_{hw}$.

In der FIG 2 ist schematisch der Wärmeübergangsweg für einen Kondensator dargestellt, der eine zweite Wärmebrücke besitzt. In diesem Fall ergibt sich für den thermischen Widerstand zwischen "Hot-Spot-Region" und Gehäuse $R'_{hc} = 1/2 R_{wc} + 1/4 R_{hw}$. Durch die zweite Wärmebrücke im Kondensator wird somit der thermische Widerstand im Wickel um 75 % und der thermische Widerstand zwischen Wickel und Gehäuse um 50 % verringert.

In der FIG 3 ist ein Wickelschema dargestellt, daß einen Kondensator zeigt, der aus einer Anodenfolie 3 und zwei überstehenden Kathodenfolien 1 aufgebaut ist. Zwischen Anodenfolie 3 und Kathodenfolie 1 sind Abstandshalter 2 angeordnet, die beispielsweise aus Papier bestehen und in denen der Elektrolyt gespeichert ist. Die überstehenden Enden der Kathodenfolien 1 stehen in thermischen Kontakt mit einerseits dem Becherboden und andererseits einem weiteren Gehäuseteil, so daß zwei Wärmebrücken entstehen.

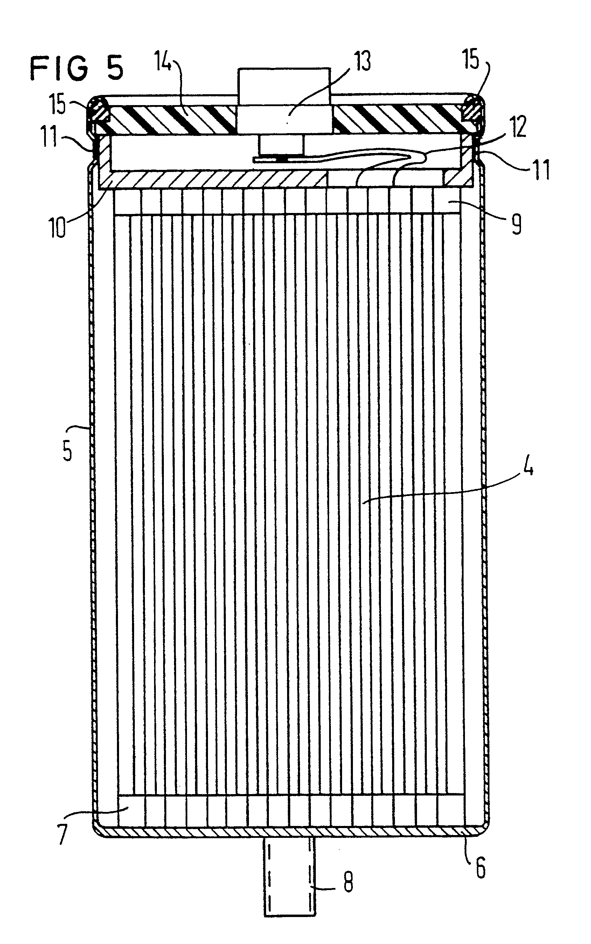

In der FIG 4 ist ein weiteres Wickelschema dargestellt, bei dem die Kathodenfolien 1 nur an einer Seite überstehen und dort die erste Wärmebrücke bilden, während die zweite Wärmebrücke durch die überstehende Anodenfolie 3 gebildet wird.

Der Überstand der jeweiligen Folien über die Stirnseiten beträgt beispielsweise 6 mm, wobei Wickelschemata dargestellt sind, die nur eine Anodenfolie und zwei Kathodenfolien aufweisen. Dies ist für einen besseren Wärmeübergang erforderlich, da die Anodenfolien in einem Wickel-Elektrolytkondensator im allgemeinen zwei- bis viermal dicker als die Kathodenfolien sind. Bei anderen Verhältnissen kann es auch ausreichend sein, jeweils nur eine Kathoden- mit einer Anodenfolie zu verwickeln.

In der FIG 5 ist ein Elektrolytkondensator dargestellt, der aus einem in ein metallisches Gehäuse 5 eingebauten Kondensatorwickel 4 besteht. Der Wickel 4 besitzt überstehende Kathodenfolien 7, die mit dem Boden 6 des Gehäuses 5 in thermischem Kontakt stehen. Am Boden 6 ist ferner ein Anschlußzapfen 8, vorzugsweise mit Gewinde, angeordnet, an dem beispielsweise ein Kühlblech befestigt werden kann.

An der anderen Stirnseite besitzt der Wickel 4 überstehende Elektrodenfolien 9, die entweder die gleiche Polarität wie die überstehenden Folien 7 oder die entgegengesetzte Polarität aufweisen. Somit sind die überstehenden Folien 9 entweder ebenfalls die Kathodenfolien oder die Anodenfolie. Die überstehenden Folien 9 stehen in thermischen Kontakt mit einer metallischen Platte 10, z.B. einer Aluminiumscheibe, die die zweite Wärmebrücke bildet. Die Platte 10 steht an der Stelle 11 in thermischen Kontakt mit dem Gehäuse 5, wobei diese Verbindung beispielsweise durch eine Passung, eine Pressung oder durch das Ansicken von außen erfolgen kann. Falls die überstehenden Elektrodenfolien 7 und 9 unterschiedliche Polarität aufweisen, ist dafür Sorge zu tragen, daß die metallische Platte 10 elektrisch vom Gehäuse 5 isoliert ist.

Wenn die überstehenden Elektrodenfolien 9 die gleiche Polarität wie die überstehenden Folien 7 aufweisen, müssen die Anschlußstreifen 12 für die Folien der anderen Polarität isoliert durch die Metallplatte 10 geführt werden. Die Anschlußstreifen 12 sind mit einer elektrischen Durchführung 13 verbunden, die in einer Deckscheibe 14 angeordnet ist. Die Deckscheibe 14 wird durch eine Umbördelung des Gehäuses 5 befestigt, wobei zwischen Gehäuse 5 und Deckscheibe 14 ein Gummiring 15 zur Abdichtung angeordnet ist.

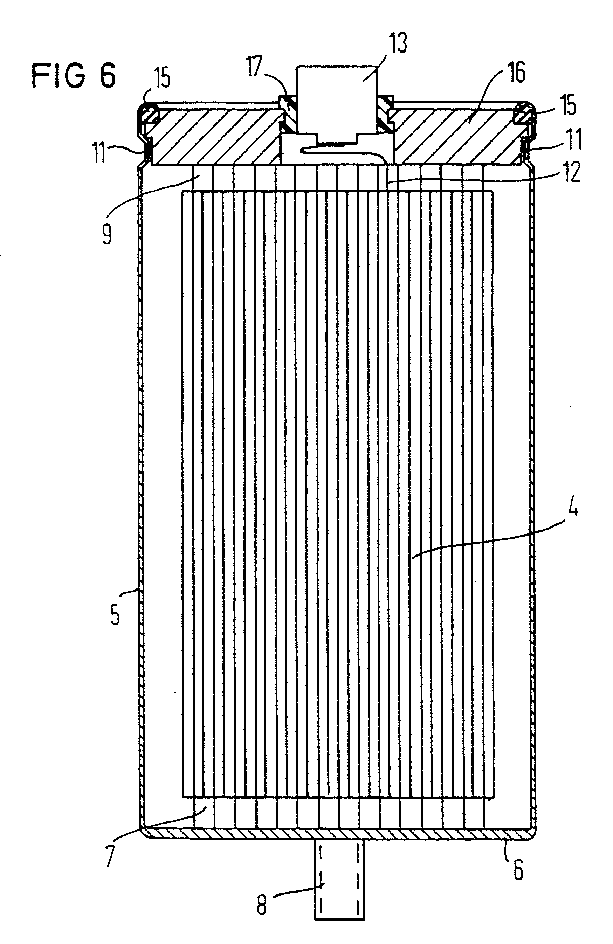

In der FIG 6 ist eine Ausführungsform dargestellt, bei der das Gehäuse 5 mit einer metallischen Platte 16 verschlossen ist, die gleichzeitig als Wärmeübertragungsteil für die überstehenden Elektrodenfolien 9 dient. In der Platte 16, z.B. einer Aluminium-Deckscheibe ist eine elektrische Durchführung 13 angeordnet, die durch die Isolation 17 elektrisch von der Platte 16 getrennt ist. An der Durchführung 13 sind Anschlußstreifen 12 angebracht.

Es sind zwar aus dem Stand der Technik Abschlußscheiben aus Aluminium bekannt, die jedoch nur einer hochtemperaturbeständigen Abdichtung des Gehäuses dienen. Eine Ableitung der Verlustwärme kommt bei diesem Stand der Technik nicht zustande, da der thermische Kontakt zum Wickel fehlt.

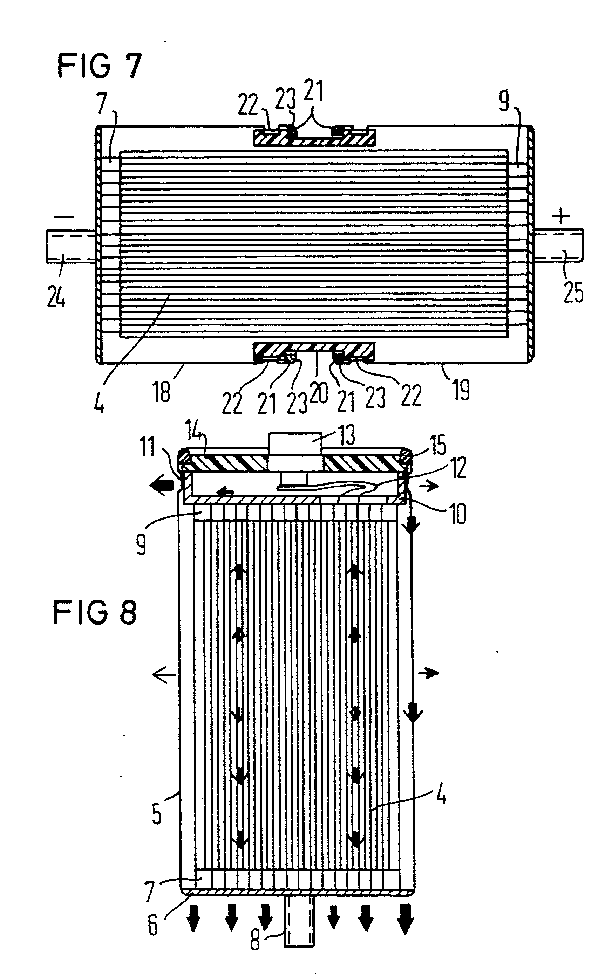

In der FIG 7 ist eine Ausführungsform mit zwei Gehäusebechern 18, 19 dargestellt. Der Kondensatorwickel 4 besitzt auf einer Seite überstehende Kathodenfolien 7 und auf der anderen Seite überstehende Anodenfolien 9. Jede Seite ist elektrisch und thermisch mit einem eigenen Metallbecher 18, 19 (z.B. aus Aluminium) verbunden. Die Becher 18, 19 werden durch ein radiales elektrisch isolierendes Teil 20 mittels Sicken 22 und Bördelungen 23 verbunden. Gegebenenfalls genügt auch zur Verbindung eine dieser angeführten Maßnahmen. Bei der Umbördelung 23 sind Gummiringe 21 zur Abdichtung vorgesehen.

Bei dieser Ausführungsform ist eine Isolierung der anodischen Zuleitung nicht erforderlich. Der Anodenbecher 19 sollte zur elektrischen Formierbarkeit zweckmäßigerweise eine entsprechen de Reinheit besitzen. Zum elektrischen Anschuß können die Becher Gewindezapfen 24, 25 besitzen.

Wegen der hohen Symmetrie besitzt diese Ausführungsform eine hohe Schüttelfestigkeit, insbesondere wenn der Wickel 4 dem Innendurchmesser des Isolierteils 20 angepaßt ist.

Es sind auch Ausführungsformen möglich, die zwei kathodisch geschaltete Gehäusebecher besitzen. In diesem Fall sind elektrische Durchführungen im Isolationsteil angeordnet, wobei allerdings der Anodenanschluß isoliert aus dem Becher herausgeführt werden muß.

In der FIG 8 sind die Wärmeströme durch unterschiedlich starke Pfeile für die in FIG 5 dargestellte Ausführungsform gezeigt. Im linken Teil der FIG 8 sind die Wärmeströme bei der Vollkühlung und im rechten Teil die Wärmeströme bei der Bodenkühlung gezeigt. Der Wickel 4 eines Elektrolytkondensators besteht zu 30 bis 40 % aus Aluminium und besitzt an und für sich einen hohen Wärmeleitwert. Dieser besteht jedoch aufgrund des Wickelschemas nur in der Wickelachsen-Richtung, weshalb der Wärmestrom trotz des längeren Weges über die überstehenden Elektrodenfolien 7 bzw. 9 zum Boden 6 bzw. zur Platte 10 läuft.

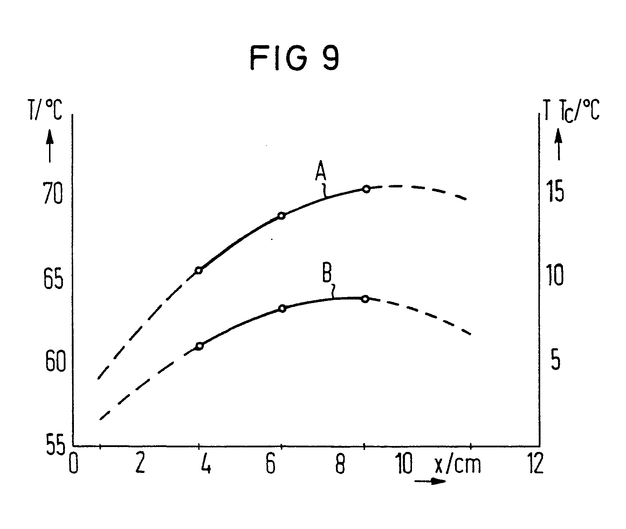

Elektrolytkondensatoren der Nenndaten 4700 µF 350 V wurden in einen Becher der Abmessungen ∅ 75 mm x 145 mm eingebaut. In der FIG 9 ist die Temperaturverteilung in der Wickelachse bei einer Belastung von 100 A/20 kHz 55°C Kühlwassertemperatur dargestellt. Die Kurve A bezieht sich auf Gehäuse, die nur am Boden und die Kurve B auf solche Gehäuse, die vollständig gekühlt sind. Die Kurven der FIG 9 wurden bei der in der FIG 6 dargestellten Ausführungsform gemessen, wobei die Temperaturverteilung in der Wickelachse in Abhängigkeit des Abstandes x vom Boden 6 des Gehäuses 5 dargestellt ist.

Die maximale Übertemperatur $T - T_c$ in der Wickelachse betrug 9°C bei Vollkühlung (Kurve B), während bei einem herkömmlichen Elektrolytkondensator je nach Kathodendicke 27 bis 33°C Übertemperatur resultierten.

Bei Beschränkung der Gehäusekühlung auf den Becherboden (Kurve A) erhöhte sich die Übertemperatur auf 16°C, da hier ein Wärmestrom entlang der Becherwand wieder ein zusätzliches Temperaturgefälle schafft (siehe FIG 8, rechter Teil), das jedoch immer noch kleiner als beim herkömmlichen Elektrolytkondensator ist. Bei einseitiger Gehäusekühlung ist deshalb eine dickere Becherwandung sinnvoll.

Neben den in der Zeichnung dargestellten Ausführungsformen von Wickel-Elektrolytkondensatoren kann der Gegenstand der Erfindung auch bei anderen Kondensatoren mit selbsttragenden Elektrodenfolien zur besseren Wärmeableitung angewandt werden.

## Ansprüche

1. Elektrischer Kondensator mit selbsttragenden Elektrodenfolien, insbesondere Wickel-Elektrolytkondensator für hohe Wechselstrombelastbarkeit, der in ein metallisches Gehäuse eingebaut ist und eine metallische Wärmebrücke zwischen Kondensator und Gehäuse besitzt, die durch eine einseitig die Stirnseite überragende Elektrodenfolie gebildet wird, die in thermischem Kontakt mit dem Boden des Gehäuses steht, **dadurch gekennzeichnet,** daß im Kondensator eine zweite Wärmebrücke angeordnet ist, die durch eine die zweite Stirnseite überragende Elektrodenfolie gebildet wird, die in thermischem Kontakt mit einem weiteren Gehäuseteil steht.

2. Elektrischer Kondensator nach Anspruch 1, **dadurch gekennzeichnet,** daß die die beiden Stirnseiten überragenden Elektrodenfolien dieselbe Polarität aufweisen.

3. Elektrischer Kondensator nach Anspruch 1, **dadurch gekennzeichnet,** daß die die beiden Stirnseiten überragenden Elektrodenfolien unterschiedliche Polarität aufweisen.

4. Elektrischer Kondensator nach zumindest einem der Ansprüche 1 bis 3, **dadurch gekennzeichnet,** daß das weitere Gehäuseteil aus einer metallischen Platte (10, 16) besteht.

5. Elektrischer Kondensator nach Anspruch 4, **dadurch gekennzeichnet,** daß die metallische Platte (16) als Gehäuseabschluß ausgebildet ist.

6. Elektrischer Kondensator nach zumindest einem der Ansprüche 1 bis 3, **dadurch gekennzeichnet,** daß das metallische Gehäuse zweiteilig ausgebildet ist (FIG 7).

7. Elektrischer Kondensator nach Anspruch 6, **dadurch gekennzeichnet,** daß bei Herausführung von Elektrodenfolien (7, 9) unterschiedlicher Polarität die beiden Gehäuseteile (18, 19) durch ein radiales elektrisch isolierendes Teil (20) miteinander verbunden sind.

8. Elektrischer Kondensator nach zumindest einem der Ansprüche 1 bis 7, **dadurch gekennzeichnet,** daß er mehrere Elektrodenfolien gleicher Polarität besitzt.

## FIG 1

$$T_c \quad\quad T_w \quad\quad\quad\quad\quad T_h$$

$$R_{wc} \quad\quad \tfrac{1}{2}R_{hw} \quad\quad \tfrac{1}{2}R_{hw}$$

$$R_{hc} = R_{wc} + R_{hw}$$

## FIG 2

$$T_c \quad\quad T_w \quad\quad T_h \quad\quad T_w \quad\quad T_c$$

$$R_{wc} \quad \tfrac{1}{2}R_{hw} \quad \tfrac{1}{2}R_{hw} \quad R_{wc}$$

$$R'_{hc} = \tfrac{1}{2}R_{wc} + \tfrac{1}{4}R_{hw}$$

## FIG 3

1

3    2

## FIG 4

1

3    2

FIG 5

FIG 6

## FIG 7

## FIG 8

## FIG 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 214 788 (ELECTRONIC CONCEPTS) <br> * Spalte 3, Zeilen 55-64; Spalte 4, Zeilen 6-10; Spalte 5, Zeile 64 - Spalte 6, Zeile 7; Figur 1 * <br> --- | 1,3 | H 01 G 9/00 <br> H 01 G 1/08 |
| A | US-A-3 670 210 (E.F. BLASE) <br> * Spalte 1, Zeile 66 - Spalte 2, Zeile 7; Spalte 2, Zeilen 70-73 * <br> --- | 1-5 | |
| A | US-A-3 681 666 (E.L. BOWLING) <br> * Spalte 1, Zeilen 33-38; Spalte 2, Zeilen 38-40,52-54 * <br> --- | 1-5 | |
| A | NEW ELECTRONICS, Band 19, Nr. 19, 30. September 1986, Seite 39, London, GB; K. DAWSON: "Electrolytic capacitor design for extended component life" <br> * Absatz: "Thermal design" * <br> ----- | 1-5 | |

RECHERCHIERTE SACHGEBIETE (Int. Cl.5)

H 01 G

Der vorliegende Recherchenbericht wurde für alle Patentansprüche erstellt

| Recherchenort | Abschlußdatum der Recherche | Prüfer |
|---|---|---|
| DEN HAAG | 10-11-1989 | MOMENE Y ARROYO M.E. |